Europäisches Patentamt

European Patent Office

Office européen des brevets

(11) Publication number: **0 042 887**

A1

## EUROPEAN PATENT APPLICATION

(21) Application number: **80200674.2**

(22) Date of filing: **27.06.80**

(51) Int. Cl.³: **B 60 K 15/02**

(43) Date of publication of application:
**06.01.82 Bulletin 82/1**

(84) Designated Contracting States:
**AT BE CH DE FR GB IT LI LU NL SE**

(71) Applicant: **Tank- en Apparatenbouw DE BLESSE B.V.
Steenwijkerweg 107
NL-8397 LC De Blesse(NL)**

(72) Inventor: **Spin, Albertus Gerardus Josef
Pepergaweg 38
NL-8395 PD Steggerda(NL)**

(74) Representative: **Konings, Lucien Marie Cornelis
Joseph et al,
OCTROOIBUREAU ARNOLD & SIEDSMA Sweelinckplein
1
NL-2517 GK Den Haag(NL)**

㊵ Gas tank, particularly an LPG-tank for a vehicle.

㊿ A gas tank (1) for a vehicle has, instead of a rectangular connecting plate, a circular connecting plate (26), which is easy to manufacture and easy to weld to the tank body (2).

FIG.1

– 1 –

Gas tank, particularly an LPG-tank for a vehicle.

The invention relates to a gas tank, particularly an LPG-tank for a vehicle, comprising a tank body and a connecting plate for appendages.

The connecting plate of the known gas tank is rectangular.

The invention has for its object to simplify the manufacture of a gas tank. To this end the connecting plate is circular. It is considerably easier to make a circular hole in the wall of a gas tank than a rectangular one. It is particularly much easier to weld a round body by automation in a wall. Moreover, by turning the connecting plate with respect to the wall any desired relative position can be obtained, so that the connections can be established at a place which is ideal for any vehicle, whilst the tank bodies and the connecting plates are universal.

The aforesaid and further features of the invention will be more fully described hereinafter with reference to a drawing.

The drawing shows in:

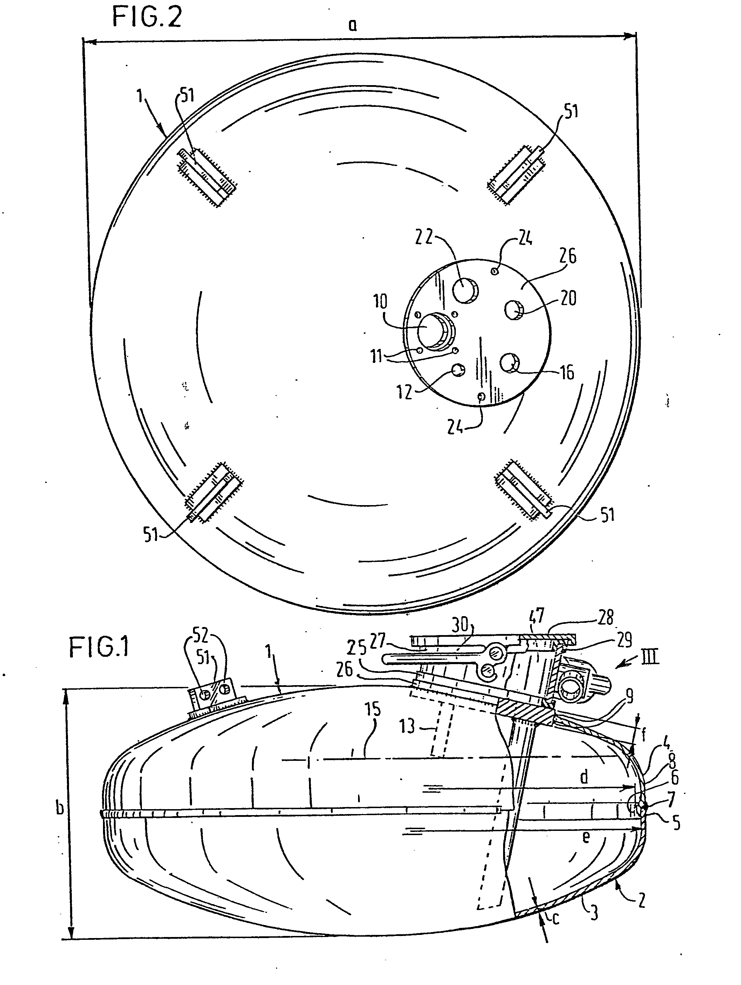

Fig. 1 a side elevation and partially a sectional view of a gas tank in accordance with the invention,

Fig. 2 a plan view of the tank of Fig. 1, the gas cap being omitted,

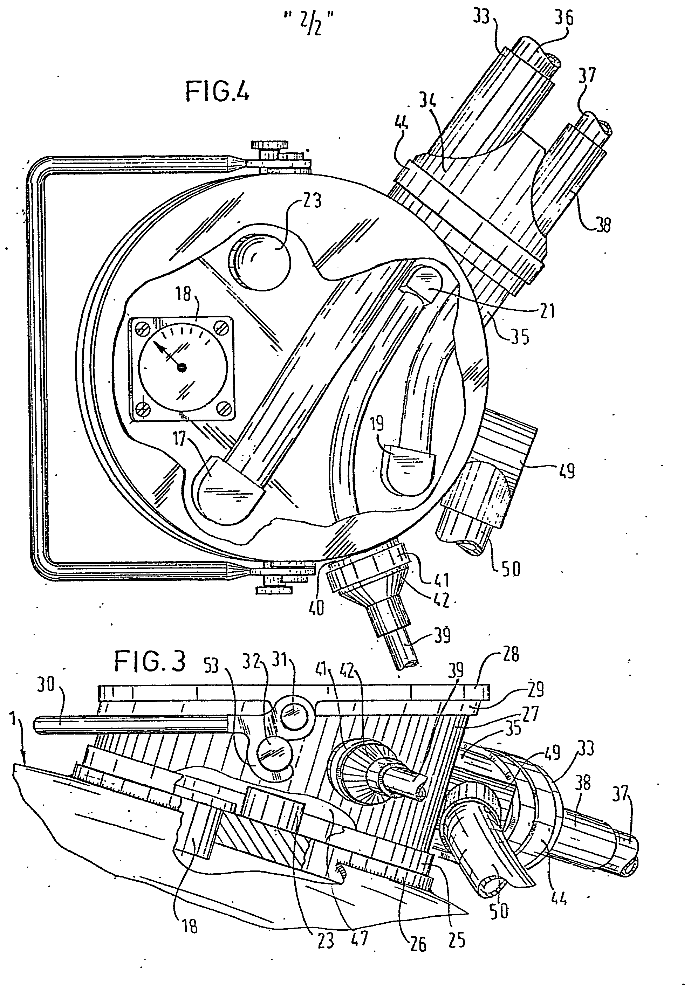

Fig. 3 on an enlarged scale a side elevation partly broken away of detail III of Fig. 1 and

Fig. 4 a plan view partly broken away of Fig. 3.

The gas tank 1 according to the invention intended for containing liquid petroleum gas for a car comprises a tank body 2, having such a shape that it can be disposed at the place of a spare wheel. The gas tank 1 has the shape of a round disc bilaterally curved in an axial outward direction and may have an outer diameter $a$ of 60 cm and a maximum height $b$ of 27 cm. The tank body 2 comprises two dishes 3 and 4, the rim 5 of one dish 3 gripping around the rim 6 of the other dish 4, whilst a welding seam 7 is made on the outer side of the other rim 6 to the rim 5. The dishes 3 and 4 have a wall thickness $c$ of, for example, 5 to 6 mm and owing to their spherical shape they are highly resistant to deformation. The other rim 6 has an inner diameter $d$ which is smaller than the inner diameter $e$ of the adjacent part 8 of the dish 4. In a circular recess of the dish 4 a circular connecting plate 26 is welded, having a thickness $f$ of for example 2 cm by means of bilateral welding seams 9. The circular connecting plate 26 has the required recesses for the accessories i.e.:

a closing hole 10 with blind screwthreaded holes 11 for a gauging meter 18,

a tapped hole 12 for a level shutter 17, a level scanning pipe 13 being welded in said tapped hole 12 and leading into the tank body 2 to the filling level 15 of 80% capacity,

a tapped hole 16 for a filling valve 19,

a tapped hole 20 for a tank shutter 21 and a tapped hole 22 for a safety valve 23.

Furthermore two blind screwthreaded holes 24 are provided for connecting a gas cap 27 with the connecting plate 26 with the interposition of an elastic stuffing ring 25 said cap being essentially circular, that is to say having the shape of a truncated cylinder, said cap being sealed on top with the interposition of an elastic stuffing ring 29 with the aid of a substantially round, particularly slightly oval cover 28, which is releasably fastened to the gas cap 27 by means of a bracket 30, which is pivotable about pins 31 and connected with the cover 28 and which grips by two hooks 53 below stationary protruding pins 32 of the gas cap 27. Thus the cover 28 can be readily removed and replaced on the gas cap 27. The filling conduit 37 passes through a branch 38 of an elastic sleeve 34 across the connecting nipple 35 of the gas cap 27 to the interior and joins the filling valve 19. The outlet conduit 39 is passed from the tank shutter 21 through a nipple 40 of the gas cap 27 and a sleeve 42 clamped tight by means of a hose clamp 41. From the level shutter 17 a conduit 36 passes via a nipple 35 of the gas cap 27 and a branch 33 of the sleeve 34 to a checking closing member (not shown). The sleeve 34 is clamped to the nipple 35 by means of a hose clamp 44. The space 47 inside the gas cap 27 communicates with the open air through an elastic elbow 49 screwed tightly in the gas cap 27 and a conduit 50 clamped therein and leading out of the vehicle.

To the dish 4 four profiled pieces 51 distributed along the periphery are provided. These pieces have a T-shaped profile and have connecting means, particularly connecting holes 52 for readily fastening the gas tank by means of brackets (not shown) to a vehicle.

The round connecting plate is particularly important for a concave, disc-shaped tank body, but it might as well be used for a different, for example, a cylindrical shape of the tank body.

<u>C L A I M S</u>

1. A gas tank, particularly an LPG-tank for a vehicle, comprising a tank body and a connecting plate for appendages, characterized in that the connecting plate is circular.

2. A gas tank as claimed in claim 1, characterized in that a circular gas cap on the connecting plate is connected with the tank body in a gastight manner.

3. A gas tank as claimed in claim 2, characterized in that the gas cap is provided with a substantially circular cover.

4. A gas tank as claimed in claim 3, characterized in that the cover is releasably connectable by means of a lever provided with hooks with the gas cap.

5. A gas tank as claimed in any one of the preceding claims, characterized in that the tank body essentially has

**0042887**

the form of a circular disc spherically curved outwardly in an axial direction.

6. A gas tank as claimed in claim 5, characterized in that the tank body essentially consists of two round dishes, the rim of one dish gripping around the other rim of the other dish and the welding seam being applied on the outer side of the dish to the first mentioned rim.

7. A gas tank as claimed in claim 6, characterized in that the other rim has a smaller diameter than the neighbouring part of the other dish.

8. A gas tank as claimed in any one of claims 5 to 7, characterized in that to at least one dish of the spherical, disc-shaped tank body a plurality of hook- or T-shaped profiles are welded, having fastening means, for example, fastening holes.

22.6.1981
**0042887**

AMENDED
CLAIMS

-1-

## CLAIMS

1. A gas tank (1), particularly a LPG-tank for a vehicle, comprising a tank body (2) and a connecting plate (26) for appendages, characterized in that the connecting plate (26) is circular and is received in a hole of a part of the tank body (2), which part extends in the vicinity of the connecting plate (26) along a mainly spherical surface.

2. A gas tank (1) as claimed in claim 1, characterized in that a circular gas cap (27) on the connecting plate (26) is connected with the tank body (2) in a gastight manner.

3. A gas tank (1) as claimed in claim 2, characterized in that the gas cap (27) is provided with a substantially circular cover (28).

4. A gas tank (1) as claimed in claim 3, characterized in that the cover (28) is releasably connectable with the gas cap (27) by means of a lever (30) provided with hooks (53).

5. A gas tank (1) as claimed in any one of the preceding claims, characterized in that the tank body (2) essentially has the form of a circular disc spherically curved outwardly in an axial direction.

6. A gas tank (1) as claimed in claim 5, characterized in that the tank body (2) essentially consists of two round dishes (3,4), the rim (5) of one dish (3) gripping around the other rim (6) of the other dish (4) and the welding seam (7) being applied on the outer side of the dish (4) to the first mentioned rim (5).

7. A gas tank (1) as claimed in claim 6, characterized in that the other rim (6) has a smaller diameter than the neighbouring part (8) of the other dish (4).

8. A gas tank (1) as claimed in any one of claims 5 to 7, characterized in that to at least one dish (4) of the spherical, disc-shaped tank body (2) a plurality of hook (51) or T-shaped profiles are welded, having fastening means, for example, fastening holes (52).

AMENDED CLAIMS

"½"

FIG.2

FIG.1

FIG.4

FIG.3

# EUROPEAN SEARCH REPORT

**European Patent Office**

Application number

EP 80200674.2

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | FR - A - 2 225 004 (CHRYSLER) <br> + Fig. 2, Pos. 11-17 + <br> -- | 1,3,4 | B 60 K 15/02 |
| | FR - A - 2 238 889 (PERRISSEL) <br> + Fig. 3 + <br> -- | 1,2 | |
| | FR - A - 1 006 949 (CAMUT) <br> + Totality + <br> -- | 1,2,3,5 | |
| | DE - C - 827 164 (LÖWIS) <br> + Page 2, lines 76-86 + <br> -- | 6,7 | **TECHNICAL FIELDS SEARCHED (Int. Cl.³)** <br><br> F 17 C 1/00 <br> B 60 K 15/00 <br> B 62 J 35/00 |
| | US - A - 1 966 241 (FURRER) <br> + Totality + <br> ---- | 1,5 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| VIENNA | 29-05-1981 | MELHARDT |

EPO Form 1503.1 06.78